# EUROPEAN PATENT SPECIFICATION

(11) **EP 2 325 211 B1**
(45) Date of publication and mention of the grant of the patent: **24.10.2012**
(21) Application number: 10191928.0
(22) Date of filing: 19.11.2010
(51) Int. Cl.: C08C 19/22, C08C 19/25, C08L 9/00, C08L 9/06

(54) **Rubber composition, pneumatic tire with such a rubber composition and method of manufacturing the rubber composition**
Gummizusammensetzung, Luftreifen mit der Gummizusammensetzung und Verfahren zur Herstellung der Gummizusammensetzung
Composition de caoutchouc, pneu avec cette composition de caoutchouc et procédé de fabrication de la composition de caoutchouc

(30) Priority: 20.11.2009 US 622750
(43) Date of publication of application: 25.05.2011
(73) Proprietor: The Goodyear Tire & Rubber Company, Akron, OH 44316-0001 (US)
(72) Inventor: Sandstrom, Paul Harry, Cuyahoga Falls, OH 44223 (US); Gulas, Brad Stephen, Cleveland, OH 44113 (US); Frantz, David Mark, Norton, OH 44203 (US); Cronin, Steven Wayne, Akron, OH 44313 (US); Woloszynek, Robert Alan, Brunswick, OH 44212 (US); Rodewald, Stephan, Canal Fulton, OH 44614 (US)
(74) Representative: Kutsch, Bernd

(56) References cited:
- EP-A1- 2 060 604
- EP-A2- 1 228 901
- EP-A2- 1 228 902
- US-A1- 2009 203 826
- US-B1- 6 369 167

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads.

US-B1- 6,369,167 describes the preparation of a siloxy-imine functionalized polymer.

EP-A- 1 228 902 describes a tire having a tread comprising 1,4-cis-polybutadiene. Such a tread is also known from EP-A- 1 228 901.

EP-A- 2 060 604 describes a rubber composition for a pneumatic tire comprising a functionalized diene-based polymer.

### Summary of the Invention

The present invention is directed to a rubber composition in accordance with claim 1, a pneumatic tire in accordance with claim 9, and a method of manufacturing in accordance with claim 12.

Dependent claims refer to preferred embodiments of the invention.

In a preferred embodiment, the present invention is directed to a pneumatic tire having a component comprising a vulcanizable rubber composition comprising, based on 100 parts by weight of elastomer (phr),
(A) from 60 to 90 phr of a a siloxy-imine functionalized rubbery polymer which is obtained by polymerizing or copolymerizing a conjugated diene monomer by using an organolithium compound as an initiator in a hydrocarbon solvent, and thereafter allowing an active terminal of the resulting polymer to react with a functionalized terminating agent bearing a siloxy and an aldimino group, represented by the general formula:

   RCH=N(CH₂)_{X}Si(OR¹)_{Y}R²_{3-Y}, (I)

   wherein R represents a group consisting of an aryl or substituted aryl having 6 to 18 carbon atoms, or a heterocycle or heteroaryl having 3 to 18 carbon atoms; R¹ and R² each independently represents a group having 1 to 18 carbon atoms selected from an alkyl, a cycloalkyl, an allyl, or an aryl; X is an integer from 1 to 20; and Y is an integer from 1 to 3;

(B) from 40 to 10 phr of polybutadiene having a microstructure comprising 96 to 99 percent cis 1,4-isomeric units, 0.1 to 1 percent trans 1,4-isomeric units and from 1 to 3 percent vinyl 1,2-isomeric units; a number average molecular weight (Mn) in a range of from 75,000 to 150,000 and a heterogeneity index (Mw/Mn) in a range of from 3/1 to 5/1; and
(C) from 50 to 150 phr of silica.

### Description of the Invention

There is disclosed to a pneumatic tire having a component comprising a rubber composition comprising, based on 100 parts by weight of elastomer (phr),
(A) from 60 to 90 phr of a a siloxy-imine functionalized rubbery polymer which is obtained by polymerizing or copolymerizing a conjugated diene monomer by using an organolithium compound as an initiator in a hydrocarbon solvent, and thereafter allowing an active terminal of the resulting polymer to react with a functionalized terminating agent bearing a siloxy and an aldimino group, represented by the general formula:

   RCH=N(CH₂)_{X}Si(OR¹)_{Y}R²_{3-Y}, (I)

   wherein R represents a group consisting of an aryl or substituted aryl having 6 to 18 carbon atoms, or a heterocycle or heteroaryl having 3 to 18 carbon atoms; R¹ and R² each independently represents a group having 1 to 18 carbon atoms selected from an alkyl, a cycloalkyl, an allyl, or an aryl; X is an integer from 1 to 20; and Y is an integer from 1 to 3;
(B) from 40 to 10 phr of polybutadiene having a microstructure comprising 96 to 99 percent cis 1,4-isomeric units, 0.1 to 1 percent trans 1,4-isomeric units and from 1 to 3 percent vinyl 1,2-isomeric units; preferably a number average molecular weight (Mn) in a range of from 75,000 to 150,000 and preferably a heterogeneity index (Mw/Mn) in a range of from 3/1 to 5/1; and
(C) from 50 to 150 phr of silica.
   The rubber composition preferably includes a siloxy-imine functionalized rubbery polymer as disclosed in US-A- 2009/0203826. The siloxy-imine functionalized rubbery polymer is obtained by polymerizing or copolymerizing a conjugated diene monomer by using an organolithium compound as an initiator in a hydrocarbon solvent, and thereafter allowing an active terminal of the resulting polymer to react with a functionalized terminating agent bearing a siloxy and an aldimino group, represented by the general formula:

   RCH=N(CH₂)_{X}Si(OR¹)_{Y}R²_{3-Y}, (I)

   wherein R represents a group consisting of an aryl or substituted aryl having 6 to 18 carbon atoms, or a heterocycle or heteroaryl having 3 to 18 carbon atoms; R¹ and R² each independently represents a group having 1 to 18 carbon atoms selected from an alkyl, a cycloalkyl, an allyl, or an aryl; X is an integer from 1 to 20; and Y is an integer from 1 to 3. In one example, R is selected from phenyl, substituted-phenyl, naphthyl, substituted-naphthyl, or heteroaryl. In another example, R is phenyl. In one example, at least one R¹ group is an ethyl radical.

As indicated, the functionalized terminating agent includes a siloxy and an aldimino group. The aldimino group can hydrogen bond with a variety of acidic functional groups and is susceptible to nucleophilic addition at the imine carbon. The siloxy group can undergo a condensation reaction with the silanol group on the surface of silica and is susceptible to nucleophilic substitution at silicon.

A significant aspect of this invention is considered herein as being the use of aldimine based siloxy-imine terminators derived from aldehydes in contrast to using ketimine based siloxy-imine terminators derived from ketones.

This is considered herein to be significant because the resulting functional elastomer has a significantly greater reactivity towards silica than a functional elastomer with its functionality derived from a siloxy-imine terminator derived from a ketone, particularly in the sense of R of Formula (I) representing a group selected from aryl, substituted aryl or a heterocycle, particularly where R represents a phenyl group, and particularly when combined with at least one of R¹ being an ethyl group.

When an active terminal of the polymerized conjugated diene, for example, is reacted with the functionalized terminating agent of Formula (I) with its combination of siloxy and aldimino groups, a mixture of products may be obtained, such as a product of a nucleophilic substitution with the alkoxysilyl group and a product of an addition reaction to the aldimino group, or both. Therefore, in the case of the reaction between the active terminal of the resulting polymer and the aldimino terminus of the functionalized terminating agent, a secondary amine is produced. When such resultant functionalized polymer is compounded with a filler, the secondary amine functionality is expected to facilitate an interaction with an acidic functional group on the surface of the filler, thereby providing a desirable filler dispersing and reinforcing effect. Further, the secondary amine is capable of forming a hydrogen bond with a silanol group, which is expected to cause a desirable dispersion of silicon.

The functionalized terminating agent also includes an alkoxysilyl group that performs a condensation reaction with a hydroxyl group (e.g. silanol group) on the surface of the amorphous silica (e.g. precipitated silica) when introduced into an end of the resulting polymer chain. The synergism of this condensation reaction and the force of the above-mentioned hydrogen bond by the amino group can provide a highly desirable reinforcing effect.

Representative of the functionalized terminating agent containing a combination of alkoxy and aldimino groups for the elastomer, include, for example, N-benzylidene-3-(triethoxysilyl)-1-propaneamine and N-naphthylidene-3-(triethoxysilyl)-1-propaneamine. Other examples may be contemplated by one having ordinary skilled in the art.

The amount of the functionalized terminating agent used may be, for example, 0.25 to 5.0 mol per one mole of the organo-alkali metal compound, which is used as an initiator for polymerization. In another example, the amount of functionalized terminating agent may be, for example, 0.5 to 1.5 mol per one mole of the organo-alkali metal compound. An amount of less than 0.25 mol is not desirable because the alkoxy group is consumed in a coupling reaction. An amount of more than 5 moles is not considered herein as being desirable, because, in this range, an excess of the terminating agent becomes of little added value.

Examples of the conjugated diene monomer include 1,3-butadiene, isoprene, 1,3-pentadiene, 2,3-dimethylbutadiene, 2-phenyl-1,3-butadiene, and 1,3-hexadiene. The conjugated diene monomer may be a homopolymer or a copolymer. Copolymerization can be with another conjugated diene monomer or a vinyl aromatic monomer, for example. Examples of the vinyl aromatic hydrocarbon monomer for use in copolymerization with the conjugated diene monomer include styrene, a-methylstyrene, 1-vinylnaphthalene, 3-vinyltoluene, ethylvinylbenzene, divinylbenzene, 4-cyclohexylstyrene, and 2,4,6-trimethylstyrene.

Functionalized vinyl aromatic monomers can also be used in copolymerization with the conjugated diene monomer and vinyl aromatic hydrocarbon monomer to form a terpolymer. Examples of functionalized vinyl aromatic monomers include 1-[(4-Ethenylphenyl)methyl]-pyrrolidine and 1-[(4-Ethenylphenyl)ethyl]-pyrrolidine, such as disclosed in US-B- 6,627,721.

When carrying out copolymerization using a conjugated diene monomer and a vinyl aromatic hydrocarbon monomer, the monomers, in one example, are 1,3-butadiene and styrene, respectively. From a practical standpoint, these monomers are readily available and have desirable anionic polymerization properties, including living properties.

Examples of the initiator for use in the polymerization reaction include organolithium compounds. In one example, the lithium compounds have 2 to 20 carbon atoms. Specific examples include ethyllithium, n-propyllithium, i-propyllithium, n-butyllithium, secbutyllithium, t-octyllithium, n-decyllithium, phenyllithium, 2-naphthyllithium, 2-butyl-phenyllithium, 4-phenyl-butyllithium, cyclohexyllithium, 4-cyclopentyllithium, and a reaction product between diisopropenylbenzene and butyllithium. The amount of initiator used includes 0.1 to 20 mmol based on 100 g of monomers.

The polymerization process is carried out in a solvent, such as a hydrocarbon solvent, that does not destroy the organolithium initiator. A suitable solvent may be selected from an aliphatic hydrocarbon, an aromatic hydrocarbon, or an alicyclic hydrocarbon. In one example, the hydrocarbons have 3 to 8 carbon atoms. Examples of the hydrocarbon include propane, n-butane, i-butane, n-pentane, i-pentane, n-hexane, mixed hexanes, cyclohexane, propene, 1-butene, i-butene, trans-2-butene, cis-2-butene, 1-pentene, 2-pentene, 1-hexene, 2-hexene, benzene, toluene, xylene, and ethylbenzene. These solvents may be used alone or in combination. From a practical standpoint, mixed hexanes, cyclohexane, and pentane are readily available and have desirable anionic polymerization solvent properties.

The monomer concentration in the solvent may be for example 5 to 50% by weight. In another example, the concentration may be for example 10 to 30% by weight. When carrying out copolymerization between a conjugated diene monomer and a vinyl aromatic hydrocarbon monomer, the content of the vinyl aromatic hydrocarbon monomer in the monomer mixture charged into a reactor may be for example 3 to 50% by weight. In another example, the content is 5 to 45% by weight.

A modifier may be used when anionic polymerization of a conjugated diene monomer is carried out. The term "modifier" is used herein to mean a compound that has a function to control the microstructure of a conjugated diene polymer and the compositional distribution of monomer units in a copolymer composed of a conjugated diene monomer and a vinyl aromatic hydrocarbon monomer. For example, the increase of the proportion of 1,2-linkage of butadiene portions of a butadiene polymer or in a butadiene portion of a butadiene-styrene copolymer, or the increase of the proportion of the 3,4-linkage of an isoprene polymer can be controlled. In addition, randomization of butadiene units or the styrene units in a butadiene-styrene copolymer, for example, can be controlled. The modifiers are not particularly limited. Examples of the modifiers include ethers such as dimethoxybenzene, tetrahydrofuran, dimethoxyethane, diethylene glycol dibutyl ether, diethylene glycol dimethyl ether, bis(tetrahydrofurylpropane), and tertiary amines such as trimethylamine, pyridine, N-methylmorpholine, N,N,N',N'-tetramethylethylenediamine, and 1,2-dipiperidinoethane. Further examples include potassium salts such as potassium-t-amylate and potassium-t-butoxide and sodium salts such as sodium-t-amylate. The amount to be used of the modifier is within the range of from 0.01 to 10 molar equivalents per one mole of the organolithium compound.

The reaction between the functionalized terminating agent and the polymerized or copolymerized monomer can be carried out utilizing standard temperatures for diene polymerization. Such temperatures can range from 30°C to 110°C, for example. The polymerization reaction can be carried under a pressure generated by the reaction. It is normally desirable to carry out the reaction under a pressure sufficient to keep the monomers substantially in a liquid phase. That is, the pressure for the polymerization reaction depends on the substances to be polymerized, diluents to be used, and polymerization temperatures, and a higher pressure can be employed if desired. Such a pressure can be obtained by an appropriate method, for example, such as by pressurizing the reactor by a gas inert to the polymerization reaction.

Generally, it is desirable to remove water, oxygen, carbon dioxide, and other catalyst poison from all of the materials, such as initiator, solvent, monomer, and the like, involved in the polymerization process.

Although the timing and method for adding the functionalized terminating agent, which contains the combination of alkoxy and aldimino groups, to the polymerization system chain is not particularly limited, generally such a terminating agent is added when the polymerization is completed or near completion. In other words, the polymerization is normally carried out until high conversions of at least 85 percent are attained. For instance, the functionalized terminating agent, which contains the combination of alkoxy and aldimino groups, will normally be added only after a monomer conversion (conversion to the elastomer) of greater than about 85 percent has been realized.

The siloxy-imine functionalized rubbery polymer or copolymer obtained, in one example, has, for example, a glass transition point (Tg) of -95 to -10°C as measured by DSC (Differential Scanning Calorimetry) using a heating rate of 10°C/min.

The Mooney viscosity (ML₁₊₄/100°C.) of the uncured siloxy-imine functionalized rubber polymer is, for example, in a range of from 10 to 150. In another example, the Mooney viscosity is, for example, in a range of from 15 to 70.

Another component of the rubber composition is a cis 1,4-polybutadiene elastomer having a microstructure comprising 96 to 99 percent cis 1,4-isomeric units, 0.1 to 1 percent trans 1,4-isomeric units and from 1 to 3 percent vinyl 1,2-isomeric units; preferably a number average molecular weight (Mn) in a range of from 75,000 to 150,000 (relatively low Mn for a cis 1,4-polybutadiene elastomer) and preferably a heterogeneity index (Mw/Mn) in a range of from 3/1 to 5/1 (a relatively high heterogeneity index range illustrating a significant disparity between its weight average and number average molecular weights). Measurement of the number average molecular weight (Mn) and the weight average molecular weight (Mw) is routinely done using known methods such as gel permeation chromatograph (GPC).

The cis 1,4-polybutadiene elastomer may be prepared, for example, by organic solvent solution polymerization of 1,3-butadiene monomer in the presence of a catalyst comprising an organonickel or organocobalt compound, an organoaluminum compound, a fluorine-containing compound, and a para styrenated diphenylamine which is exemplified in US-B- 5,451,646. Such catalyst components may comprise nickel octoate, triisobutylaluminum, hydrogen fluoride and para styrenated diphenylamine.

The relatively broad heterogeneity index (Mw/Mn ratio range of 3/1 to 5/1) of the cis 1,4-polybutadiene elastomer is considered herein to be significant to promote improved processing of the unvulcanized rubber composition of which a major, rather than a minor, fraction of its rubber component is the cis 1,4-polybutadiene rubber, in a sense of promoting a relatively smooth surfaced extrudate, as compared to similar and more typical cis 1,4-polybutadiene elastomers rubber having the aforesaid significantly higher molecular weight and significantly lower heterogeneity index in a range of from 1.5/1 to 2.5/1. The cis 1,4-polybutadiene elastomer is also considered herein to be unique in that it is configured with a level, or degree, of branching.

In one embodiment, the rubber composition includes from about 40 to about 10 phr of the specialized polybutadiene rubber. Suitable specialized polybutadiene rubber is available commercially, such as Budene® 4001 from Goodyear.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials.

The rubber composition includes from 50 to 150 phr of silica.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

The vulcanizable rubber composition may include from 5 to 50 phr of carbon black.

Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

The vulcanizable rubber composition may include both silica and carbon black in a combined concentration in any weight ratio of silica to carbon black. In one embodiment, the vulcanizable rubber composition includes both silica and carbon black in approximately the same weight amounts, i.e., a weight ratio of about 1.

Other fillers may be used in the rubber composition including, but not limited to, particulate fillers including ultra high molecular weight polyethylene (UHMWPE), particulate polymer gels such as those disclosed in US-B- 6,242,534; US-B-6,207,757; US-B- 6,133,364;US-B- 6,372,857;US-B- 5,395,891; or US-B-6,127,488, and plasticized starch composite filler such as that disclosed in US-B-5,672,639.

It may be preferred to have the rubber composition for use in the tire component to additionally contain a conventional sulfur containing organosilicon compound. Examples of suitable sulfur containing organosilicon compounds are of the formula:

Z-Alk-Sₙ-Alk-Z VIII

in which Z is selected from the group consisting of 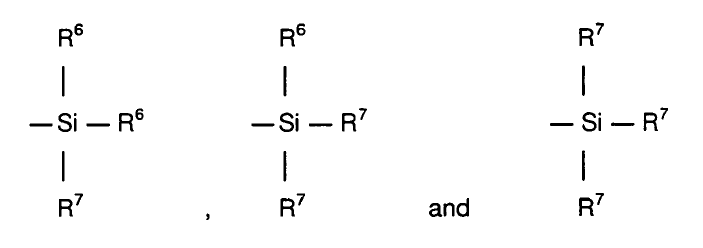 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula VIII, preferably Z is 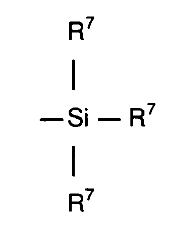 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include compounds disclosed in US-A- 2006/0041063. In one embodiment, the sulfur containing organosilicon compounds include the reaction product of hydrocarbon based diol (e.g., 2-methyl-1,3-propanediol) with S-[3-(triethoxysilyl)propyl] thiooctanoate. In one embodiment, the sulfur containing organosilicon compound is NXT-Z™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound of formula I in a rubber composition will vary depending on the level of other additives that are used. Generally speaking, the amount of the compound of formula I will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1.5 to 6 phr being preferred. Typical amounts of tackifier resins, if used, comprise 0.5 to 10 phr, usually 1 to 5 phr. Typical amounts of processing aids comprise 1 to 50 phr. Such processing aids can include, for example, aromatic, naphthenic, paraffinic, and low PCA (polycyclic aromatic) oils such as MES, TDAE, heavy naphthenic, and SRAE processing oils. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 1.5, phr. In another embodiment, combinations of a primary and a secondary accelerator might be used with the secondary accelerator being used in smaller amounts, such as from about 0.05 to about 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. Preferably, the component is a tread.

The pneumatic tire of the present invention may be a race tire, passenger tire, aircraft tire, agricultural, earthmover, off-the-road and truck tire. Preferably, the tire is a passenger or truck tire. The tire may also be a radial or bias, with a radial being preferred.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

In order to further illustrate the present invention, the following specific examples are given. In the examples, phr means parts per hundred parts rubber by weight and % values are by weight unless otherwise specified.

### Example 1

Preparation of non-functional control polymer: Polymerizations were carried out in a one gallon batch reactor under moderate stirring and inert nitrogen atmosphere. The reactor is equipped with a variable speed agitator and a heating/cooling jacket to control the reactor temperature via a distributed Foxboro control system. Prior to polymer loading, the reactor was filled with dry hexane and quenched with n-BuLi to minimize the scavenger level. The reaction temperature was set at 60°C. Approximately 1500 grams of 14.5 wt % premix (25/75 wt/wt styrene/butadiene in hexane) was charged into the reactor after it was first passed through a bed of molecular sieves and silica gel under a nitrogen atmosphere. N-Butyl-lithium initiator and N,N,N',N'-tetramethylethylenediamine (TMEDA) modifier were introduced via common syringe techniques. Conversion data was determined gravimetrically or by gas chromatography (GC) analysis of residual monomer. For GC testing, aliquots of the reaction mixture were taken via the dip leg during the course of polymerization and collected into a 60/40 (w/w) solution of ethanol/decane. Polymerizations were terminated after full conversion was reached by treating the live polymer cement with an isopropanol/BHT antioxidant solution. The polymer was recovered by drum drying. The target polymer Mooney was 40 with a glass transition temperature of approximately -25°C.

### Example 2

Preparation of functional polymers: Functionalized polymers were prepared as described in Example 1 with the exception that isopropanol/BHT termination was replaced with the appropriate functionalized terminating agent, as discussed further below in Example 3, used at one molar equivalent to the amount of butyl-lithium used to initiate the polymerization. Base Mooney viscosity prior to the functional termination was approximately 40 for all functional polymers and Tg of -25°C.

### Example 3

Representative example showing the unexpected performance enhancement of N-benzylidene-3-(triethoxysilyl)-1-propaneamine: Four polymer types were prepared as described in Example 1 (control) and Example 2 (functionalized polymers). Functionalized terminating agents are shown below:

### Siloxy-Imine Termintors

| | |
|---|---|
| isopropanol (-H) | 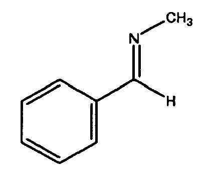 |
| a) Control Non-Functional | b) N-Benzylidenemethylamine |
| 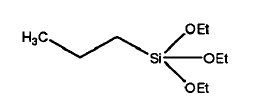 | 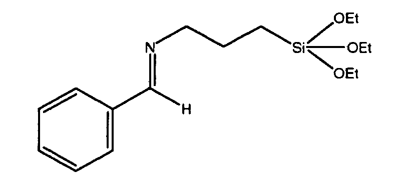 |
| c) N-propyltriethoxysilane | d) N-benzylidene-3-(triethoxysilyl)-1-propaneamine |

The polymers were compounded as follows: The polymers were prepared, and ultimately tested for unexpected performance, into a compound including 65 phr of Silica, 70 phr of the experimental or control polymer, and 30 phr of polybutadiene, and other additives, as follows:

| **Stage** | **Ingredient** | **phr** |
|---|---|---|
| | Solution | |
| | styrene | |
| | butadiene | |
| | rubber, | |
| | functionalized | |
| NP1 | or control | 70 |
| NP1 | Polybutadiene | 30 |
| NP1 | Silica | 65 |
| | Coupling | |
| NP1 | Agent* | 10.4 |
| NP1 | Oil | 20 |
| NP1 | Zinc oxide | 3.5 |
| NP1 | Stearic Acid | 2 |
| NP1 | Antioxidant | 2.2 |
| NP1 | Wax | 1.5 |
| NP2 | re-mill | |
| PR | Sulfur | 1.7 |
| PR | Accelerators | 3.1 |
| PR | Antioxidant | 0.75 |

| | | |
|---|---|---|
| *50 wt% active absorbed on carbon black | | |

Compounds were mixed in a 300 cc Brabender mixer in three stages, which consisted of two non-productive stages (NP1 and NP2) and 1 productive stages (PR). Rotor speed was adjusted to maintain a constant drop temperature for each compound. Performance indicators for Rolling Resistance (RR) were tan δ at 30-40°C, 5% strain and 10 Hz as well as room temperature rebound, Lab indicator for treadwear was DIN Abrasion and Lab indicator for processing and filler/polymer interaction was uncured G' @ 100°C, 15% strain and 0.83 Hz. The results are shown in Table 1.

**Table 1:**

| Lab Results for Rolling Resistance. Treadwear, and Filler/Polymer Interaction | | | | | |
|---|---|---|---|---|---|
| Example | Polymer Description | Polymer Mooney | Compound Uncured G' 0.83 Hz | RR-Tan δ 5% 30°C | Treadwear-DIN Abrasion |
| 3a | Isopropanol control | 37.3 | 183.9 | 0.244 | 140 |
| 3a | Isopropanol control | 61 | 276.1 | 0.224 | 165 |
| 3b | N-Benzylidenemethylamine | 38 | 183.7 | 0.22 | 140 |
| 3c | N-propyltriethoxysilane | 58.2 | 260.6 | 0.217 | 122 |
| 3d | N-Benzylideneaminopropyltriethoxysilane | 52.2 | ***375.8*** | ***0.176*** | ***117*** |
| | performance direction | | high better | lower better | lower better |

Examples 3a with low and high Mooney non-functional controls show that increasing Mooney only has a slight effect on lowering tan δ. Examples 3b and 3c show that terminating with only a benzylidene or a siloxypropyl functionalized terminating agent does not lead to significant performance enhancement. Example 3d however shows the unexpectedly powerful reduction in tan δ, decrease in DIN Abrasion and increase in polymer-silica interaction is only achieved when using the N-benzylidene-3-(triethoxysilyl)-1-propaneamine terminator, the bi-functional functionalized terminating agent.

### Example 4

Table 2 reveals that the dominating feature to improved compound performance is the incorporation of a N-benzylidene-3-(triethoxysilyl)-1-propaneamine (N-Bn TEOS) terminator and not differences in molecular weight.

**Table 2: Molecular Weight Comparison**

| Example # | Terminating Species | Polymer Mooney | Compound Viscosity (RPA) | tan delta 30°C |
|---|---|---|---|---|
| 4a | isopropanol control | 34 | 171 | 0 236 |
| 4b | isopropanol control | 39 | 174 9 | 0 230 |
| 4c | Isopropanol control | 61 | 276 1 | 0 224 |
| 4d | N-Bn TEOS | 48 | **388.1** | **0.179** |
| 4e | N-Bn TEOS | 52 2 | **375.8** | **0.176** |
| 4f | N-Bn TEOS | 89 | **349.1** | **0.174** |

### Example 5

Representative example showing the unexpected result that polymers terminated with aldehyde derived imines (aldimines) provide a significant improvement in compound performance over those terminated with ketone derived imines (ketimine). Three polymer types were prepared as described in Examples 1-2. One non-functional control and two functional polymers using two different classes of imine terminators as shown below. The first functional terminator identified as a) is an aldimine and the second identified as b) is an example of a ketimine. Various examples of ketimines, including the ketimine identified in b), are disclosed in US-B-6,369,197.

| | |
|---|---|
| a) N-benzylidene-3-(triethoxysilyl)-1-propaneamine | b) 3-(1,3-dimethylbutylidene)aminopropyl-triethoxysilane |
| 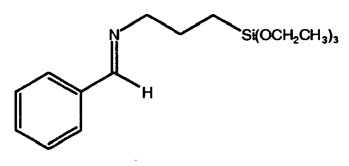 | 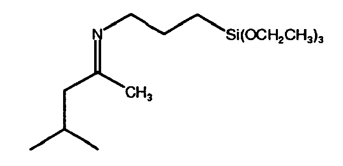 |

Compound results in Table 3 show that the ketimine-siloxy terminated polymer is indeed an improvement over the control non-functional polymer, however the aldimine-siloxy terminated polymers are unexpectedly far superior to ketimine. The polymers were compounded as described above. Results are shown in Table 3.

**Table 3:**

| Comparison of Ketamine-Siloxy and Aldimine-Siloxy Terminated Polymers | | | | | | |
|---|---|---|---|---|---|---|
| **Example** | **Polymer Type** | **uncured G'** | **TD (40°C, 5%)** | **Rebound RT** | **TD (0°C)** | **DIN Abrasion** |
| 5 | Control | 149 | 0.22 | 40.8 | 0.48 | 140 |
| 5b | Ketamine | 220 | 0.18 | 43.1 | 0.48 | 131 |
| 5a | Aldimine | 306 | 0.14 | 45.4 | 0.49 | 122 |

### Example 6

This example serves to further demonstrate the unexpected yet significant reactivity difference between polymers functionalized with aldimines and those functionalized with ketimines.

A representative example of the unexpected and dramatic change in polymer reactivity to hydrolysis and condensation of aldimine-siloxy functional polymers versus ketimine-siloxy functional polymers is as follows.

Three polymer types were prepared as described in Examples 1-2. One non-functionalized control and two functionalized polymers using two different classes of imine terminators; N-benzylidene-3-(triethoxysilyl)-1-propaneamine (aldimine) and N-(1,3-dimethylbutylidene)-3-(triethoxylsilyl)-1-propaneamine (ketimine).

In this example, the prepared polymer was dissolved in hexane at approximate 15 wt% solids was first tested for its zero time molecular weight. Each polymer/hexane solution was then injected into steaming hot water at pH 7.6 and exposed for 20 minutes, 60 minutes, or 120 minutes. The precipitated polymer crumb was then re-tested for molecular weight. Table 4 shows that the aldimine functionalized polymer is unexpectedly and significantly more reactive towards siloxy condensation as measured by a rapid increase in polymer molecular weight with exposure time to hot water.

**Table 4: Results of Steam Hydrolysis**

| **Polymer Time @ 95C** | **Control Mn (g/mol)** | **Ketimine Mn (g/mol)** | **Aldimine Mn (g/mol)** |
|---|---|---|---|
| 0 min | 184,000 | 193,000 | 220,000 |
| 20 min | 175,000 | 201,000 | 423,000 |
| 60 min | 177,000 | 234,000 | 676,000 |
| 120 min | 174,000 | 324,000 | 812,000 |

This example can serve as a model for explaining the observed improvement in performance of aldimine derived functionalized polymers in silica compounding. It is known that the siloxy groups enhance silica tread compound performance through condensation with the silica filler surface. Aldimine-siloxy groups are more reactive then ketimine-siloxy groups enhancing this condensation reaction.

## Claims

1. A rubber composition comprising, based on 100 parts by weight of elastomer (phr):
(A) from 60 to 90 phr of a siloxy-imine functionalized rubbery polymer obtained by polymerizing or copolymerizing a conjugated diene monomer using an organolithium compound as an initiator in a hydrocarbon solvent, and thereafter allowing an active terminal of the resulting polymer to react with a functionalized terminating agent bearing a siloxy and an aldimino group, represented by the general formula:
RCH=N(CH₂)_{Y}Si(OR¹)_{Y}R²_{3-Y}, (I)
wherein R represents a group consisting of an aryl or substituted aryl having 6 to 18 carbon atoms or a heterocycle or heteroaryl having 3 to 18 carbon atoms; R¹ and R² each independently represents a group having 1 to 18 carbon atoms selected from an alkyl, a cycloalkyl, an allyl, or an aryl; X is an integer from 1 to 20; and Y is an integer from 1 to 3;
(B) from 40 to 10 phr of polybutadiene having a microstructure comprising 96 to 99 percent cis 1,4-isomeric units, 0.1 to 1 percent trans 1,4-isomeric units and from 1 to 3 percent vinyl 1,2-isomeric units; and
(C) from 50 to 150 phr of silica.

2. The rubber composition of claim 1 wherein the polybutadiene has a number average molecular weight (Mn) in a range of from 75,000 to 150,000.

3. The rubber composition of claim 1 or 2 wherein the polybutadiene has a heterogeneity index (Mw/Mn) in a range of from 3/1 to 5/1.

4. The rubber composition of at least one of the previous claims comprising 50 to 100 phr of silica.

5. The rubber composition of at least one of the previous claims comprising further comprising from 5 to 50 phr of carbon black.

6. The rubber composition of at least one of the previous claims wherein R is selected from phenyl, substituted-phenyl, naphthyl, substituted-naphthyl, or heteroaryl.

7. The rubber composition of claim 6 wherein R is phenyl.

8. The rubber composition of at least one of the previous claims wherein at least one R¹ group is an ethyl radical.

9. A pneumatic tire having a component comprising the rubber composition of at least one of the previous claims.

10. The pneumatic tire of claim 9 wherein the component is selected from the group consisting of a tread cap, a tread base, a sidewall, an apex, a chafer, a sidewall insert, a wirecoat and an innerliner.

11. The pneumatic tire of claim 10 wherein the component is a tread cap or a tread base.

12. A method of manufacturing a rubber composition, the method comprising, based on 100 parts by weight of elastomer (phr), mixing:
(A) from 60 to 90 phr of a siloxy-imine functionalized rubbery polymer obtained by polymerizing or copolymerizing a conjugated diene monomer using an organolithium compound as an initiator in a hydrocarbon solvent and thereafter allowing an active terminal of the resulting polymer to react with a functionalized terminating agent bearing a siloxy and an aldimino group, represented by the general formula:
RCH=N(CH₂)_{X}Si(OR¹)_{Y}R²_{3-Y}, (I)
wherein R represents a group consisting of an aryl or substituted aryl having 6 to 18 carbon atoms or a heterocycle or heteroaryl having 3 to 18 carbon atoms; R¹ and R² each independently represents a group having 1 to 18 carbon atoms selected from an alkyl, a cycloalkyl, an allyl, or an aryl; X is an integer from 1 to 20; and Y is an integer from 1 to 3;
(B) from 40 to 10 phr of polybutadiene having a microstructure comprising 96 to 99 percent cis 1,4-isomeric units, 0.1 to 1 percent trans 1,4-isomeric units and from 1 to 3 percent vinyl 1,2-isomeric units; and
(C) from 50 to 150 phr of silica.

13. The method of claim 12 wherein the polybutadiene has a number average molecular weight (Mn) in a range of from 75,000 to 150,000.

14. The method of claim 12 or 13 wherein the polybutadiene has a heterogeneity index (Mw/Mn) in a range of from 3/1 to 5/1.

15. The method of at least one of the claims further comprising adding 5 to 50 phr of carbon black to the rubber composition.

## Patentansprüche

1. Kautschukzusammensetzung, umfassend, auf Basis von 100 Gewichtsteilen Elastomer (ThK):
(A) 60 bis 90 ThK eines siloxy-imin-funktionalisierten gummiartigen Polymers, erhalten durch Polymerisieren oder Copolymerisieren eines konjugierten Dienmonomers unter Verwendung einer Organolithiumverbindung als Initiator in einem Kohlenwasserstoff-Lösungsmittel, und danach Reagierenlassen einer aktiven Endgruppe des resultierenden Polymers mit einem funktionalisierten Abbruchmittel, das eine Siloxy- und eine Aldiminogruppe trägt, dargestellt durch die allgemeine Formel:
RCH=N(CH₂)_{X}Si(OR¹)_{Y}R²_{3-Y}, (I)
wobei R eine Gruppe darstellt, bestehend aus einem Aryl oder substituierten Aryl mit 6 bis 18 Kohlenstoffatomen oder einem Heterozyklus oder Heteroaryl mit 3 bis 18 Kohlenstoffen; R¹ und R² jedes unabhängig eine Gruppe mit 1 bis 18 Kohlenstoffatomen darstellt, ausgewählt aus einem Alkyl, einem Cycloalkyl, einem Allyl oder einem Aryl; X eine ganze Zahl von 1 bis 20 ist; und Y eine ganze Zahl von 1 bis 3 ist;
(B) 40 bis 10 ThK Polybutadien mit einer Mikrostruktur, die 96 bis 99 Prozent cis-1,4-Isomereinheiten, 0,1 bis 1 Prozent trans-1,4-Isomereinheiten und 1 bis 3 Prozent Vinyl-1,2-Isomereinheiten umfasst; und
(C) 50 bis 150 ThK Silika.

2. Kautschukzusammensetzung nach Anspruch 1, wobei das Polybutadien eine zahlenmittlere Molmasse (Mn) in einem Bereich von 75.000 bis 150.000 aufweist.

3. Kautschukzusammensetzung nach Anspruch 1 oder 2, wobei das Polybutadien einen Heterogenitätsindex (Mw/Mn) in einem Bereich von 3:1 bis 5:1 aufweist.

4. Kautschukzusammensetzung nach mindestens einem der vorgenannten Ansprüche, umfassend 50 bis 100 ThK Silika.

5. Kautschukzusammensetzung nach mindestens einem der vorgenannten Ansprüche, weiter 5 bis 50 ThK Carbon Black umfassend.

6. Kautschukzusammensetzung nach mindestens einem der vorgenannten Ansprüche, wobei R aus Phenyl, substituiertem Phenyl, Naphthyl, substituiertem Naphthyl oder Heteroaryl ausgewählt ist.

7. Kautschukzusammensetzung nach Anspruch 6, wobei R Phenyl ist.

8. Kautschukzusammensetzung nach mindestens einem der vorgenannten Ansprüche, wobei mindestens eine R¹-Gruppe ein Ethylradikal ist.

9. Luftreifen mit einem Bauteil, umfassend die Kautschukzusammensetzung mindestens eines der vorgenannten Ansprüche.

10. Luftreifen nach Anspruch 9, wobei das Bauteil aus der aus einem Laufstreifenoberteil, einem Laufstreifenunterteil, einer Seitenwand, einem Kernprofil, einem Wulstschutzstreifen, einem Seitenwandeinsatz, einem Drahtüberzug und einer Innenisolierung bestehenden Gruppe ausgewählt ist.

11. Luftreifen nach Anspruch 10, wobei das Bauteil ein Laufstreifenoberteil oder ein Laufstreifenunterteil ist.

12. Verfahren zur Herstellung einer Kautschukzusammensetzung, wobei das Verfahren, auf Basis von 100 Gewichtsteilen Elastomer (ThK), das Mischen umfasst von:
(A) 60 bis 90 ThK eines siloxy-imin-funktionalisierten gummiartigen Polymers, erhalten durch Polymerisieren oder Copolymerisieren eines konjugierten Dienmonomers unter Verwendung einer Organolithiumverbindung als Initiator in einem Kohlenwasserstoff-Lösungsmittel, und danach Reagierenlassen einer aktiven Endgruppe des resultierenden Polymers mit einem funktionalisierten Abbruchmittel, das eine Siloxy- und eine Aldiminogruppe trägt, dargestellt durch die allgemeine Formel:
RCH=N(CH₂)_{X}Si(OR¹)_{Y}R²_{3-Y}, (I)
wobei R eine Gruppe darstellt, bestehend aus einem Aryl oder substituierten Aryl mit 6 bis 18 Kohlenstoffatomen oder einem Heterozyklus oder Heteroaryl mit 3 bis 18 Kohlenstoffen; R¹ und R² jedes unabhängig eine Gruppe mit 1 bis 18 Kohlenstoffatomen darstellt, ausgewählt aus einem Alkyl, einem Cycloalkyl, einem Allyl oder einem Aryl; X eine ganze Zahl von 1 bis 20 ist; und Y eine ganze Zahl von 1 bis 3 ist;
(B) 40 bis 10 ThK Polybutadien mit einer Mikrostruktur, die 96 bis 99 Prozent cis-1,4-Isomereinheiten, 0,1 bis 1 Prozent trans-1,4-Isomereinheiten und 1 bis 3 Prozent Vinyl-1,2-Isomereinheiten umfasst; und
(C) 50 bis 150 ThK Silika.

13. Verfahren nach Anspruch 12, wobei das Polybutadien eine zahlenmittlere Molmasse (Mn) in einem Bereich von 75.000 bis 150.000 aufweist.

14. Verfahren nach Anspruch 12 oder 13, wobei das Polybutadien einen Heterogenitätsindex (Mw/Mn) in einem Bereich von 3:1 bis 5:1 aufweist.

15. Verfahren nach mindestens einem der Ansprüche, weiter das Zusetzen von 5 bis 50 ThK Carbon Black zu der Kautschukzusammensetzung umfassend.

## Revendications

1. Composition de caoutchouc comprenant, basées sur 100 parties en poids d'élastomère (phr) :
(A) de 60 à 90 phr, un polymère caoutchouteux comportant une fonctionnalité siloxy-imine, que l'on obtient par polymérisation ou par copolymérisation d'un monomère diénique conjugué à titre d'initiateur dans un solvant d'hydrocarbure, et faire ensuite réagir l'extrémité terminale active du polymère résultant avec un agent de terminaison fonctionnalisé pourtant un groupe siloxy et un groupe aldimino, répondant à la formule général
RCH=N(CH₂)ₓSi(OR¹)_{y}R²_{3-y}, (I)
dans laquelle R représente un groupe reconstitué par un groupe aryle ou un groupe aryle substitué contenant de 6 à 18 atomes de carbone, ou un groupe hétérocyclyle ou un groupe hétéroaryle contenant de 3 à 18 atomes de carbone ; R¹ et R² représentent, chacun indépendamment l'un de l'autre, un groupe contenant de 1 à 18 atomes de carbone choisi parmi un groupe alkyle, un groupe cycloalkyle, un groupe allyle ou un groupe aryle ; X représente un entier de 1 à 20 ; et Y représente un entier de 1 à 3 ;
(B) de 40 à 10 phr, un polybutadiène possédant une microstructure comprenant des unités 1,4-isomère de configuration cis à concurrence de 96 à 99 %, des unités 1,4-isomère de configuration trans à concurrence de 0,1 à 1 %, et des unités 1,4-isomère de configuration vinyle à concurrence de 1 à 3 % ; et
(C) de 50 à 150 phr, de la silice.

2. Composition de caoutchouc selon la revendication 1, dans laquelle le polybutadiène possède un poids moléculaire moyen en nombre (Mn) dans la plage de 75.000 à 150.000.

3. Composition de caoutchouc selon la revendication 1 ou 2, dans laquelle le polybutadiène possède un indice d'hétérogénéité (Mw/Mn) dans la plage de 3/1 à 5/1.

4. Composition de caoutchouc selon au moins une des revendications précédentes, comprenant de la silice à concurrence de 50 à 100 phr.

5. Composition de caoutchouc selon au moins une des revendications précédentes, comprenant en outre du noir de carbone à concurrence de 5 à 50 phr.

6. Composition de caoutchouc selon au moins une des revendications précédentes, dans laquelle R est choisi parmi un groupe phényle, un groupe phényle substitué, un groupe naphtyle, un groupe naphtyle substitué ou un groupe hétéroaryle.

7. Composition de caoutchouc selon la revendication 6, dans laquelle R représente un groupe phényle.

8. Composition de caoutchouc selon au moins une des revendications précédentes, dans laquelle au moins un groupe R¹ représente un radical éthyle.

9. Bandage pneumatique possédant un composant comprenant la composition de caoutchouc selon au moins une des revendications précédentes.

10. Bandage pneumatique selon la revendication 9, dans lequel le composant est choisi parmi le groupe constitué par une chape de bande de roulement, une base de bande de roulement, un flanc, un bourrage sur tringle, une bandelette-talon, un insert pour flanc, un enrobage de fil métallique et un calandrage intérieur.

11. Bandage pneumatique selon la revendication 10, dans lequel le composant est une chape de bande de roulement ou une base de bande de roulement.

12. Procédé de préparation d'une composition de caoutchouc, le procédé comprenant, en se basant sur 100 parties en poids d'élastomère (phr), le fait de mélanger :
(A) à concurrence de 60 à 90 phr, un polymère caoutchouteux à fonctionnalité siloxy-imine que l'on obtient par polymérisation ou par copolymérisation d'un monomère diénique conjugué en utilisant un composé d'organolithium à titre d'initiateur dans un solvant d'hydrocarbure et en faisant ensuite réagir l'extrémité terminale active du polymère résultant avec un agent de terminaison fonctionnalisé pourtant un groupe siloxy et un groupe aldimino, répondant à la formule général :
RCH=N(CH₂)ₓSi(OR¹)_{y}R²_{3-y}, (I)
dans laquelle R représente un groupe reconstitué par un groupe aryle ou un groupe aryle substitué contenant de 6 à 18 atomes de carbone, ou un groupe hétérocyclyle ou un groupe hétéroaryle contenant de 3 à 18 atomes de carbone ; R¹ et R² représentent, chacun indépendamment l'un de l'autre, un groupe contenant de 1 à 18 atomes de carbone choisi parmi un groupe alkyle, un groupe cycloalkyle, un groupe allyle ou un groupe aryle ; X représente un entier de 1 à 20 ; et Y représente un entier de 1 à 3 ;
(B) de 40 à 10 phr, un polybutadiène possédant une microstructure comprenant des unités 1,4-isomère de configuration cis à concurrence de 96 à 99 %, des unités 1,4-isomère de configuration trans à concurrence de 0,1 à 1 %, et des unités 1,4-isomère de configuration vinyle à concurrence de 1 à 3 % ; et
(C) de 50 à 150 phr, de la silice.

13. Procédé selon la revendication 12, dans lequel le polybutadiène possède un poids moléculaire moyen en nombre (Mn) dans la plage de 75.000 à 150.000.

14. Procédé selon la revendication 12 ou 13, dans lequel le polybutadiène possède un indice d'hétérogénéité (Mw/Mn) dans la plage de 3/1 à 5/1.

15. Procédé selon au moins une des revendications précédentes, comprenant en outre l'addition de noir de carbone à concurrence de 5 à 50 phr à la composition de caoutchouc.
